(19)

Europäisches
Patentamt
European
Patent Office
Office européen
des brevets

(11)     EP 1 919 153 A1

(12)     EUROPEAN PATENT APPLICATION

(43) Date of publication:
    07.05.2008 Bulletin 2008/19

(51) Int Cl.:
    *H04L 27/38* (2006.01)        *H04L 25/03* (2006.01)

(21) Application number: 06301106.8

(22) Date of filing: 31.10.2006

(84) Designated Contracting States:
    AT BE BG CH CY CZ DE DK EE ES FI FR GB GR
    HU IE IS IT LI LT LU LV MC NL PL PT RO SE SI
    SK TR
    Designated Extension States:
    AL BA HR MK RS

(71) Applicant: France Telecom S.A.
    75015 Paris (FR)

(72) Inventor: Yoshida, Yuki
    Sayko
    KYOTO CITY Kyoto 606-8243 (JP)

(54)     Receiver, symbol detection method, program and storage medium for compensating IQ
         imbalance

(57)     A receiver including receiving portion that receives signals that have a phase and amplitude showing one of a symbol group consisting of a plurality of symbols; an IQ imbalance amount information storage portion 131 that stores IQ imbalance amount information showing the amount of IQ imbalance that occurs in at least one of the phase and amplitude of a signal that is received by the receiving portion; a likelihood calculation portion 140 that sets the signal received by the receiving portion as a symbol detection object signal and, based on information showing the phase and amplitude of the symbol detection object signal and the IQ imbalance amount information that is stored in the IQ imbalance amount information storage portion 131, calculates the likelihood for each symbol that constitutes the symbol group of being the symbol shown by the symbol detection object signal; and a maximum likelihood detection portion 141 that detects the symbol shown by the symbol detection object signal based on the likelihood of each symbol calculated by the likelihood calculation portion 140.

FIG. 3

EP 1 919 153 A1

**Description**

TECHNICAL FIELD

The present invention relates to a receiver, a symbol detection method, a program, and a storage medium, and particularly relates to a receiver, a symbol detection method, a program, and a storage medium for preventing degradation of the accuracy of symbol acquisition processing.

BACKGROUND ART

Wireless communications systems are intended to perform mapping of the content (symbols) of specified quantities of communications data to a plurality of coordinate positions on an In-phase (I) and Quadrature-phase (Q) plane; sequentially assign coordinate positions to the communication data based on this mapping; and sequentially transmit signals that have a phase and amplitude corresponding to the assigned coordinate position.

In such wireless communications systems, based on the phase and amplitude of the received signal, the receiver detects the symbol shown by a signal from a symbol group that is constituted from a plurality of symbols that are respectively mapped to each of the aforementioned coordinate positions, and obtains transmission data from the detection result.

However, the waveform of a signal that the receiver receives is often changed compared to the waveform during sending due to various disturbances during transmission. In one example, signals that are sequentially transmitted reach a receiver through multiple paths differing in length due to creeping and reflection, and so past signals can overlap the received signals. In the above detection, the symbol must be detected based on the waveform that has thus been altered, leading to a drop in the detection accuracy. Therefore, various techniques have been proposed for enhancing the detection accuracy, one of which being particle filtering (PF) that employs sequential importance sampling (SIS).

A receiver that employs PF performs maximum likelihood detection processing (that is, processing to detect a symbol of maximum likelihood) on a single signal by a plurality of maximum likelihood detection processing circuits (or maximum likelihood detection processing routines) called "particles". Based on a plurality of acquired detection results, a single coordinate position is acquired. In this way, when maximum likelihood processing is performed with a plurality of particles, the probability of obtaining the correct symbol increases due to the statistical effectiveness.

Below, maximum likelihood detection processing that is performed in each particle is briefly explained. Note that in the following explanation, it is assumed that received signals within a past specified time are overlapped on a received signal.

Each particle stores a probability function (importance function) for calculating the likelihood of each symbol that constitutes the aforementioned symbol group being a symbol that is shown by a received signal of the detection object, based on the received symbol of the detection object and past received signals and past detection results obtained until then by the particle. This importance function is a function that shows the a posteriori probability of the symbol shown by the received signal of the detection object being the aforementioned symbol, in the case of there being a received signal of the detection object and past received signals and a past detection result obtained until then by the particles.

Each particle obtains a detection result of the maximum likelihood process based on the likelihood of each symbol found by the importance function. For example, assume there are four symbols, X1, X2, X3, and X4, that constitute the symbol group, with the likelihoods being, respectively, 0.1, 0.2, 0.3, 0.4. In this case, the particle generates one, two, three, and four, respectively, of the four numbers R1, R2, R3, and R4 corresponding respectively to symbols X1, X2, X3, and X4. One number is extracted therefrom at random, and the symbol corresponding to the extracted number is the detection result of the maximum likelihood detection process.

The detection results that the particles obtain show a distribution corresponding to the importance function.

Since the importance function is a function that uses past detection results, the detection result obtained by a particle is not necessarily correct. Therefore, in PF, the index (called a weight) indicating the degree of proximity with reality for each particle is used. The receiver, based on this weight, evaluates the probability of the detection result of each particle and then ultimately determines one symbol.

The weight shall now be described in detail. The weight is a value for evaluating the result of detection that each particle performed in the past. Each particle, based on all the received signals within a specified time in the past, determines the probability of all the detection results being obtained within the past specified time by the ideal probability function and the importance function and weights that proportion. By doing so, the closer the weight is to 1, the closer are the probability that is found by the probability function that completely matches reality and the probability found by the importance function. Therefore, the result of determination of a particle performed in the past can be said to be correct.

Since it is impossible to actually acquire an ideal probability function, each particle finds the weight by making an assumption. This assumption is that the size of the overlapping portion of the symbol can be measured and that the spread of the measured size follows a Gauss distribution. By making this assumption, the weight can be calculated. The receiver, based on the weight calculated in this way, evaluates the correctness of the detection result of each particle.

DISCLOSURE OF THE INVENTION

A transmitter is provided with an oscillator that generates a sine wave and, by altering the phase and amplitude of this sine wave in accordance with the content of transmission data, generates a signal. A receiver also produces a sine wave similar to the sine wave of the transmitter, and by multiplying this sine wave by the received signal, obtains an I component of the received signal. Also, a Q component of the received signal is obtained by multiplying a cosine wave, whose phase is shifted by 90 degrees from the sine wave, by the received signal. Based on these components, the symbol shown by the signal is acquired.

However, in the process of altering the phase and amplitude and performing multiplication of the sine wave, phase and amplitude imbalances of the I component and Q component (IQ imbalances) can be caused by the degree of precision of the hardware. In the processes of obtaining a symbol shown by the phase and amplitude of a signal, such as the aforementioned process for obtaining a detection result of the maximum likelihood detection processing and the process for obtaining the weight (hereinafter generically referred to as the symbol acquisition process), the receiver obtains a symbol using the phase and amplitude of the received signal. When there is the aforementioned IQ imbalance in this phase and amplitude, there has been the problem of degradation of the accuracy of the symbol obtaining process.

Accordingly, one object of the present invention is to provide a receiver, a symbol detection method, a program, and a storage medium that can prevent a degradation of the accuracy of the symbol obtaining process.

The receiver of the present invention for attaining the aforementioned object is a receiver that includes: a receiving portion that receives signals that have a phase and amplitude showing one of a symbol group consisting of a plurality of symbols; an IQ imbalance amount information storage portion that stores IQ imbalance amount information showing the amount of IQ imbalance that occurs in at least one of the phase and amplitude of a signal that is received by the receiving portion; a likelihood calculation portion that sets the signal received by the receiving portion as a symbol detection object signal and, based on information showing the phase and amplitude of the symbol detection object signal and the IQ imbalance amount information that is stored in the IQ imbalance amount information storage portion, calculates the likelihood for each symbol that constitutes the symbol group of being the symbol shown by the symbol detection object signal; and a symbol detection portion that detects the symbol shown by the symbol detection object signal based on the likelihood of each symbol calculated by the likelihood calculation portion.

Thereby, since the likelihood is calculated based on the IQ imbalance amount information, it is possible to prevent a degradation of the accuracy of the symbol acquisition processing by an IQ imbalance that occurs in the phase and amplitude of the received signal.

Also, in the aforementioned receiver, the receiving portion may sequentially receive a plurality of signals, and the likelihood calculation portion may set each signal sequentially received by the receiving portion as the symbol detection object signal and, based moreover on one or a plurality of symbols detected by the symbol detection portion for the respective one or a plurality of signals received prior to the symbol detection object signal, calculate the likelihood for each symbol that constitutes the symbol group of being the symbol shown by the symbol detection object signal.

Thereby the receiver, using symbols obtained in the past for a plurality of signals sequentially received, can calculate the likelihood based on the IQ imbalance amount information.

Also, in the aforementioned receiver, the receiver includes the likelihood calculation portion and the symbol detection portion and includes a plurality of symbol acquisition portions that acquire symbols according to the detection result of the symbol detection portion, and the receiver may additionally include a symbol determination portion that determines symbols shown by the symbol detection object signal based on the sum for each symbol acquisition portion of the likelihoods calculated for each symbol that constitutes the symbol group by the likelihood calculation portion and each of the symbols acquired by the symbol acquisition portion.

Thereby, for each symbol acquisition portion, the correctness of the symbol detected as a symbol that is shown by the symbol detection object signal is evaluated, and so it is possible to determine one symbol.

Also, a symbol detection method according to the present invention consists of a receiving step that receives signals that have a phase and amplitude showing one of a symbol group consisting of a plurality of symbols; a likelihood calculation step that sets the signal received in the receiving step as a symbol detection object signal and, based on information showing the phase and amplitude of the symbol detection object signal and IQ imbalance amount information that is stored in an IQ imbalance amount information storage portion that stores IQ imbalance amount information showing the amount of IQ imbalance that occurs in at least one of the phase and amplitude of a signal that is received in the receiving step, calculates the likelihood for each symbol that constitutes the symbol group of being the symbol shown by the symbol detection object signal; and a symbol detection step that detects the symbol shown by the symbol detection object signal based on the likelihood of each symbol calculated by the likelihood calculation step.

A program according to the present invention is a program that causes a computer to execute a likelihood calculation step that sets a signal received in a receiving portion that receives signals having a phase and amplitude showing one of a symbol group consisting of a plurality of symbols as a symbol detection object signal and, based on information showing the phase and amplitude of the symbol detection object signal and IQ imbalance amount information that is stored in an IQ imbalance amount information storage portion that stores IQ imbalance amount information showing the amount of IQ imbalance that occurs in at least one of the phase and amplitude of a signal that is received by the receiving portion, calculates the likelihood for each symbol that constitutes the symbol group of being the symbol shown by the symbol detection object signal; and a symbol detection step that detects the symbol shown by the symbol detection object signal based on the likelihood of each symbol calculated by the likelihood calculation step.

Also, a storage medium according to the present invention is a computer-readable storage medium that stores the aforementioned program.

BRIEF DESCRIPTION OF THE DRAWINGS

FIG. 1 is a schematic block diagram showing the system constitution of a radio transmission system according to an embodiment of the present invention.
FIG. 2 is a schematic block diagram showing the system configuration of a receiver according to an embodiment of the present invention.
FIG. 3 is a schematic block diagram showing the internal constitution of the demodulation portion according to an embodiment of the present invention.
FIG. 4 is a flowchart that shows the process flow of the demodulation portion according to an embodiment of the present invention.
FIG. 5 is a graph that shows both the result of computer simulation using the background art of the present invention and the result of computer simulation using a radio transmission system according to an embodiment of the present invention.
FIG. 6 is a schematic block diagram that shows the internal constitution of the demodulation portion according to the background art of the present invention.

BEST MODE FOR CARRYING OUT THE INVENTION

Embodiments of the present invention shall be described with reference to the attached drawings.

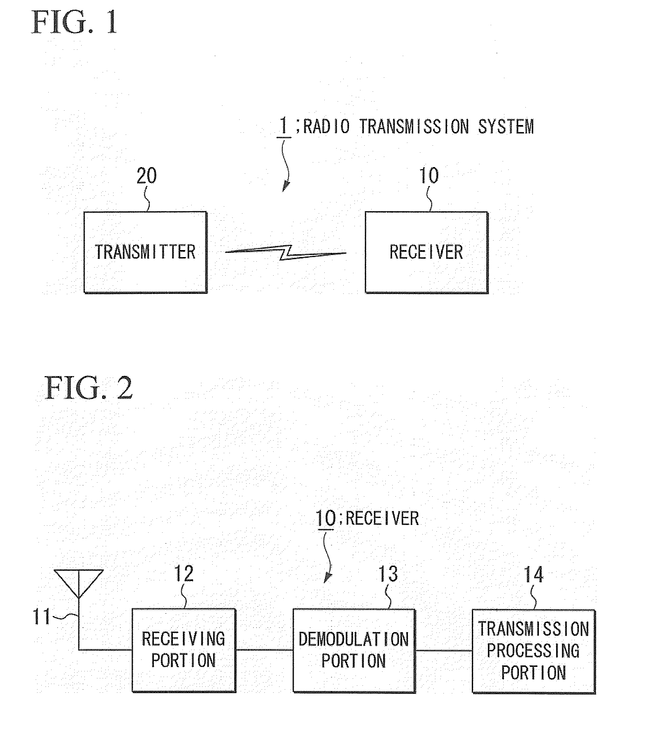

FIG. 1 is a schematic block diagram showing the system constitution of a radio transmission system 1 according to an embodiment of the present invention. As shown in the same drawing, the radio transmission system 1 is constituted by a receiver 10 and a transmitter 20.

The receiver 10 and the transmitter 20 are wireless communication devices used in mobile communications systems, such as mobile telephone terminal devices, personal handyphone system (PHS) terminal devices, and base station devices. Hereinbelow, the functions thereof are specifically explained.

The transmitter 20 performs mapping of the content (symbols) of specified quantities of communications data to a plurality of coordinate positions on an In-phase (1) and Quadrature-phase (Q) plane. The transmitter 20 sequentially obtains transmission data to be transmitted for each aforementioned specified quantity and, based on this mapping, sequentially assigns coordinate positions. Then, signals that have a phase and amplitude corresponding to the assigned coordinate positions are sequentially transmitted. Thereby, each signal has a phase and amplitude that shows one from a symbol group that is constituted from a plurality of symbols that are respectively mapped to each of the aforementioned coordinate positions.

Here, the specific number and position of the plurality of coordinate positions on the IQ plane in which symbols are mapped differs according to the modulation method. As an example of this modulation method, there are phase modulation methods such as quadrature phase shift keying (QPSK) and phase amplitude modulation methods such as 16 quadrature amplitude modulation (16QAM).

In a specific example, the transmitter 20 is provided with an oscillator that generates a specified carrier wave (for example, a sine wave) and sequentially controls the phase and amplitude of this carrier wave based on the aforementioned coordinate positions to which the transmission data is mapped. That is, the coordinate positions on the IQ plane show the phase and amplitude of the carrier wave, and the transmitter 20 sets the phase and amplitude of the carrier wave to the phase and amplitude shown by the specified coordinate positions to which the transmission data is mapped. The transmitter 20 thus sequentially obtains signals showing specified symbols, and after performing specified frequency conversion and amplification on each of the acquired signals, sequentially transmits each signal into the wireless sphere using an antenna.

The receiver 10 sequentially receives the signals transmitted by the transmitter 20 over the wireless sphere and demodulates them to obtain the original transmission data. In the received signals, the signal and noise are overlapped within a past specified time (this specified time shall be denoted as T).

The receiver 10 performs demodulation of the signal by particle filtering (PF) that uses sequential importance sampling (SIS). Although PF is implemented to resolve various problems (blind problems) that occur in blind equalization, the aforementioned problem of IQ imbalance remains. When application of the blind equalization methods via PF for the system with such IQ imbalance is considered, since the state-space models used in background methods implicitly assume the equal power balance and the orthogonality between the I and Q branches, the performance of these equalizers will be seriously deteriorated. The present embodiment proposes a blind equalization method via PF in the presence of an IQ imbalance both at the transmitter 20 and the receiver 10, and shows the result of evaluation of its performance via computer simulations.

FIG. 2 is a schematic block diagram showing the system configuration of the receiver 10. As shown in the drawing, the receiver 10 is constituted to include an antenna 11, a receiving portion 12, a demodulation portion 13, and a transmission processing portion 14.

The antenna 11 sequentially receives signals transmitted over the wireless sphere by the transmitter 20 and outputs them to the receiving portion 12.

The receiving portion 12 performs specified frequency conversion and amplification on each received signal that is input from the antenna 11. In addition, the receiving portion 12 is provided with an oscillator that produces a specified cosine wave and multiplies this cosine wave by each received signal. Then, using a low-pass filter, the higher harmonic component is removed from the signal that is obtained as a result of the multiplication. Also, the receiving portion 12 obtains a sine wave by shifting the phase of the specified cosine wave by 90 degrees. Then, the sine wave thus obtained is multiplied by each received signal and, using a similar low-pass filter, removes the higher harmonic component from the signal that is obtained as a result of the multiplication. The receiving portion 12 sequentially outputs the two types of signals thus obtained for each received signal to the modulation portion 13.

The modulation portion 13, based on the aforementioned two types of signals input from the receiving portion 12, determines the symbol that is respectively shown by each received signal, and outputs it to the transmission processing portion 14. The processing of the demodulation portion 13 is described in detail below. The transmission processing portion 14 acquires the transmission data based on the input symbol and performs transmission processing in accordance with the transmitted data.

The processing performed by the demodulation portion 13 shall be explained in detail hereinbelow. In order to facilitate understanding in the following explanation, the background art shall be explained first. Then, the processing performed in the demodulation portion 13 shall be explained in detail in contrast with the background art.

Numerous variables are used in the explanation below, with a single variable at times appearing in both a bold and non-italicized font and a non-bold and italicized font. In this case, the bold and non-italicized font indicates a vector quantity, while a non-bold and italicized font indicates a scalar quantity.

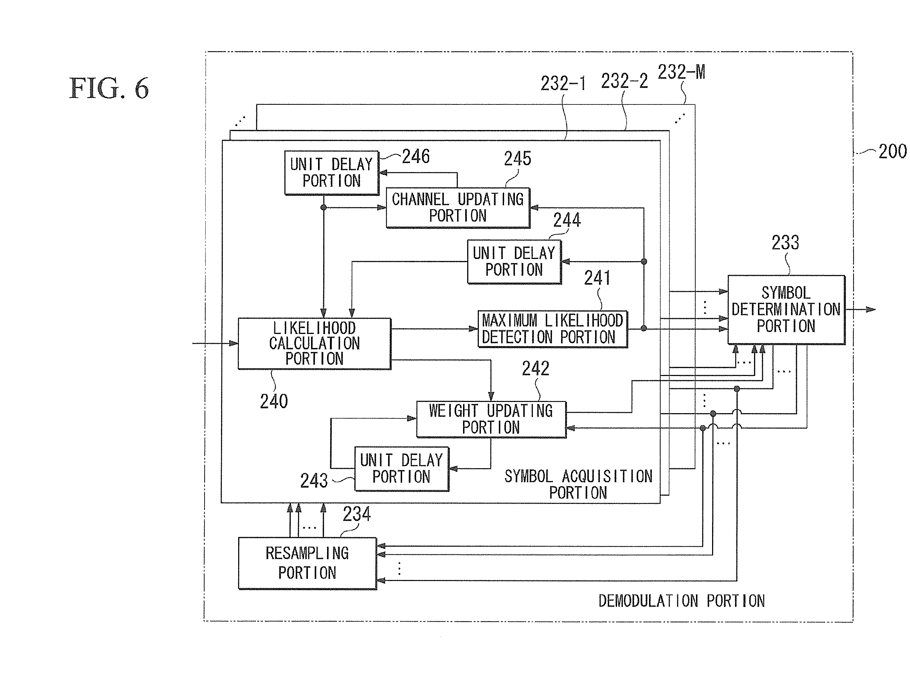

The explanation shall begin with the background art. FIG. 6 is a schematic block diagram that shows the internal constitution of the demodulation portion 200 according to the background art. Based on the aforementioned two types of signals input from the receiving portion 12, a demodulation portion 200 determines the symbol shown by each received signal and outputs the symbol to the transmission processing portion 14.

As shown in FIG. 6, the demodulation portion 200 is constituted to include M symbol acquisition portions 232-1, 232-2,..., 232-M; symbol determination portion 233; and resampling portion 234. Hereinbelow, the symbol acquisition portions 232-1, 232-2,..., 232-M are generically referred to symbol acquisition portions 232.

Each symbol acquisition portion 232 is constituted to include therein a likelihood calculation portion 240, a maximum likelihood detection portion 241, a weight updating portion 242, a unit delay portion 243, a unit delay portion 244, a channel updating portion 245, and a unit delay portion 246. The unit delay portion 243, the unit delay portion 244, and the unit delay portion 246 are all storage means that are provided with a storage region of a specified size.

The demodulation portion 200 assumes an equal power balance and orthogonality between the I and Q branches. Also, the differential coded binary symbols $S_t$ shown in Eq. (1) are transmitted in frames of length T+1 through a frequency-selective channel.

$$s_t \in \{-1, +1\}, \quad t = 0,1,2,\cdots \tag{1}$$

When the coherence time of the fading process is long enough compared to the frame size, it is common to assume that the channel impulse response is constant for the duration of the frame. Letting L denote the length of the channel, the resulting discrete-time constitutes can be represented by a dynamical state-space model shown in Eq. (2) and Eq. (3). Eq. (2) and Eq. (3) are called a state equation and observation equation, respectively. The power "T" of any matrix or vector quantity denotes a transpose.

$$\mathbf{s}_t = \mathbf{T}\mathbf{s}_{t-1} + \mathbf{u}_t \tag{2}$$

$$y_t = \mathbf{h}^T \mathbf{s}_t + n_t \tag{3}$$

$\mathbf{S}_t$ is a vector of the element count L showing all the transmitted symbols from the time t - L + 1 to time t, and is specifically shown by Eq. (4).

$$\mathbf{s}_t = [s_t\ s_{t-1}\ \cdots\ s_{t-L+1}]^T \tag{4}$$

Also, T is a matrix called the state-transition matrix, with the content thereof shown by Eq. (5). For a given i, $\mathbf{I}_i$ is a unit matrix consisting of i rows and i columns and, and for a given i and j, $\mathbf{0}_{i \times j}$ is a zero matrix consisting of i rows and j columns.

$$\mathbf{T} = \begin{bmatrix} \mathbf{0}_{1 \times L-1} & \mathbf{0}_{1 \times 1} \\ \mathbf{I}_{L-1} & \mathbf{0}_{L-1 \times 1} \end{bmatrix} \tag{5}$$

Also, $\mathbf{U}_t$ is called the state perturbation, and is shown by Eq. (6).

$$\mathbf{u}_t = [s_t\ 0\ \cdots\ 0]^T \tag{6}$$

Also, **h** shows the discrete-time equivalent channel impulse response, and is here called a channel vector. It is specifically given by Eq. (7). Here, for a given I, $h_i$ is called the channel coefficient of $S_i$.

$$\mathbf{h} = [h_0\ h_1\ \cdots\ h_{L-1}]^T \tag{7}$$

Also, $n_t$ is a variable according to zero-mean Additive White Gaussian Noise (AWGN), and is here called noise. It is specifically given by Eq. (8). Here, when i ~ j is written, - is an operator that shows the distribution of variable i becoming probability distribution j. $N(\mu,\sigma^2)$ shows the normal distribution of average $\mu$ and variance $\sigma^2$

$$n_t \sim N\!\left(0, \sigma^2\right) \tag{8}$$

Also, $y_t$ is information that shows the amplitude and phase of a received signal (the received signal observed by the receiver 10) shown by the two types of signals input from the demodulation portion 13 in time t.

The demodulation portion 200, under the assumption of the value of each channel coefficient $h_i$ not being understood, estimates the coordinate positions respectively shown by a plurality of received signals that are received within one frame (the signal group that is constituted by these received signals is written as $y_{0:T} = \{y_0, y_1,..., y_T\}$. Similarly, the transmitted symbol group is written as $s_{0:T} = \{s_0, s_1,..., s_T\}$.). This estimation is called Maximum A Posteriori (MAP) estimation since it is performed using the a posteriori probability.

Hereinbelow, p[] will represent the probability density function (pdf) or the probability mass function (pmf). Thereby, $p[s_{0:T}|y_{0:T}]$ shows the probability function of the a posteriori probability of the transmitted symbol group $s_{0:T} = \{s_0, s_1,\cdots, s_T\}$, under the assumption of the received signal group $y_{0:T} = \{y_0, y_1,\cdots, y_T\}$ being observed. The preferred result $s_{0:T}^{(MAP)}$ of the MAP estimation performed by the demodulation portion 200 is shown as in Eq. (9) using $p$ [$s_{0:T}|y_{0:T}$]. Here, with respect to a function f(x) that relates to a variable x, $\arg\max_{x}\{f(x)\}$ is a function that finds x in which f(x) is a maximum.

$$s_{0:T}^{(MAP)} = \arg\max_{s_{0:T}}\{p[s_{0:T}|y_{0:T}]\} \tag{9}$$

Since the Eq. (9) includes a transmitted symbol group $s_{0:T}$ on the right-hand side, it is not possible for the receiver 10 to perform MAP estimation using the Eq. (9). Therefore, the receiver 10 obtains the MAP estimation result using the importance function. Specifically, each symbol acquisition group 232 performs calculation of the importance function $q[s_{0:T}|y_{0:T}]$ for the total possibility of $s_{0:T}$. As a result of this calculation, for each received signal that is shown by $y_{0:T}$, the likelihood for each symbol that constitutes the symbol group of being the symbol shown by the received signal is obtained. Each symbol acquisition group 232, based on this result, obtains one symbol for each received signal in the aforementioned manner. The symbol 1 determination portion 233 thus obtains the MAP estimation result $s_{0:T}^{(i\max)}$ based on the respective symbol groups $s_{0:T}^{(i)} = \left\{s_0^{(i)}, s_1^{(i)}, \cdots, s_T^{(i)}\right\}$ (i = 1, 2,..., M) obtained by each symbol acquisition portion 232. A detailed explanation is given below based on FIG. 6.

The received signal that is shown by the aforementioned two types of signals input to the demodulation portion 200 is input to the likelihood calculation portion 240. The likelihood calculation portion 240 sequentially sets the received signals that are sequentially input as symbol detection object signals and, by substituting information that shows the phase and amplitude thereof (for example, $y_t$) and one or a plurality of symbols (for example, $s_{0:t-1}^{(i)} = \left\{s_0^{(i)}, s_1^{(i)}, \cdots, s_{t-1}^{(i)}\right\}$) that are detected by the maximum likelihood detection portion 241 described below for the respective one or a plurality of received signals (for example, $y_{0:t-1} = \{y_0, y_1, \cdots y_{t-1}\}$) that are input prior to the symbol detection object signal into the importance function, calculates the likelihood for each symbol that constitutes the symbol group of being the symbol shown by the symbol detection object signal. The maximum likelihood detection portion 241, based on the likelihood of each symbol group that is thus calculated, detects and obtains the symbol that is shown by the symbol detection object signal (for example, $s_t^{(i)}$). A specific calculation method is shown below while explaining the importance function in greater detail.

The SIS method relies on building a Monte Carlo approximation of the desired distribution by symbols recursively obtained and their associated weights. In SIS, the symbol $s_t^{(i)}$ that is detected and obtained by the maximum likelihood detection portion 241 is called a particle, and the detection and acquisition thereof is expressed as drawing of a particle, and so this terminology will be employed in the explanation below. Note that the term "particle" is also used as a word that refers even to the symbol acquisition group 232.

In the importance sampling (IS) scheme, a particle obtained in the maximum likelihood detection portion 241 is drawn according to the importance function which is a posterior pmf. This is shown by Eq. (10).

$$s_{0:T}^{(i)} \sim q[s_{0:T} | y_{0:T}] \tag{10}$$

The right-hand side of Eq. (10) is rewritten as Eq. (11).

$$q[s_{0:t} | y_{0:t}] = q[s_t | s_{0:t-1}, y_{0:t}] q[s_{0:t-1} | y_{0:t-1}] \quad \forall t \tag{11}$$

Eq. (11) shows that the importance function $q[s_{0:T}|y_{0:T}]$ is recursively determined, and from Eq. (10) and Eq. (11) $s_t^{(i)}$ is given as Eq. (12) using the importance function.

$$s_t^{(i)} \sim q[s_t | s_{0:t-1}^{(i)}, y_{0:t}] \tag{12}$$

Below, the importance function $q[s_t | s_{0:t-1}^{(i)}, y_{0:t}]$ that can be specifically calculated is found. First, $p[s_{0:T}|y_{0:T}]$ has the relation as shown in Eq. 13.

$$\begin{aligned} p[s_{0:t} | y_{0:t}] &= p[s_{0:t} | y_{0:t-1}, y_t] \\ &= \frac{p[y_t | s_{0:t}, y_{0:t-1}] p[s_{0:t-1} | y_{0:t-1}]}{p[y_t | y_{0:t-1}]} \\ &\propto p[y_t | s_{0:t}, y_{0:t-1}] p[s_{0:t-1} | y_{0:t-1}] \end{aligned} \tag{13}$$

Eq. (13) provides the sequential computation of $p[s_{0:T}|y_{0:T}]$, while the likelihood function $p[y_t|s_{0:t}, y_{0:t-1}]$ can be analytically derived. The likelihood function can be represented as Eq. (14). $R^L$ is a notation expressing L-dimension Euclidean space.

$$p[y_t | s_{0:t}, y_{0:t-1}] = \int_{R^L} p[y_t | \mathbf{h}, \mathbf{s}_t] p[\mathbf{h} | s_{0:t-1}, y_{0:t-1}] d\mathbf{h} \tag{14}$$

The first item in the integrand on the right-hand side is, based on Eq. (3) and Eq. (8), rewritten as shown in Eq. (15). That is, it follows a Gauss distribution.

$$p[y_t | \mathbf{h}, \mathbf{s}_t] = N\left(\mathbf{s}_t^T \mathbf{h}, \sigma^2\right) \tag{15}$$

On the other hand, it is useful to realize that the probability density function $p[h|s_{0:t}, y_{0:t}]$ of the channel vector is proportional to the second item in the integrand on the right-hand side of Eq. (14). This is shown in Eq. (16).

$$p[\mathbf{h}|s_{0:t}, y_{0:t}] \propto p[y_t|\mathbf{h}, \mathbf{s}_t] p[\mathbf{h}|s_{0:t-1}, y_{0:t-1}] \qquad (16)$$

Here, the variation in the magnitude of the component of past received signals that overlap the received signal is assumed to follow a Gauss distribution. That is, assuming the channel vector $\mathbf{h}$ follows a Gauss distribution with a mean $\overline{\mathbf{h}}_{-1}$ and a variance $\mathbf{R}_{-1}$, the channel vector $\mathbf{h}$ is given as Eq. (17).

$$\mathbf{h} \sim N\left(\overline{\mathbf{h}}_{-1}, \mathbf{R}_{-1}\right) \qquad (17)$$

Under this assumption, the second item of the right-hand side and the left-hand side of Eq. (16) are given as Eq. (18) and Eq. (19), respectively.

$$p[\mathbf{h}|s_{0:t-1}, y_{0:t-1}] \sim N\left(\overline{\mathbf{h}}_{t-1}, \mathbf{R}_{t-1}\right) \qquad (18)$$

$$p[\mathbf{h}|s_{0:t}, y_{0:t}] \sim N\left(\overline{\mathbf{h}}_t, \mathbf{R}_t\right) \qquad (19)$$

As a result, since both pdfs in the integrand of Eq. (14) are Gaussian, their product is also Gaussian and can be analytically found as Eq. (20).

$$p[y_t|s_{0:t}, y_{0:t-1}]$$
$$= \frac{|\mathbf{R}_t|^{1/2}}{\left(2\pi\sigma^2|\mathbf{R}_{t-1}|\right)^{1/2}} \exp\left[-\frac{1}{2}\left\{\frac{y_t^2}{\sigma^2} + \overline{\mathbf{h}}_{t-1}^T \mathbf{R}_{t-1}^{-1} \overline{\mathbf{h}}_{t-1}\right.\right. \qquad (20)$$
$$\left.\left. -\left(\frac{\mathbf{s}_t y_t}{\sigma^2} + \mathbf{R}_{t-1}^{-1}\overline{\mathbf{h}}_{t-1}\right)^T \mathbf{R}_t \left(\frac{\mathbf{s}_t y_t}{\sigma^2} + \mathbf{R}_{t-1}^{-1}\overline{\mathbf{h}}_{t-1}\right)\right\}\right]$$

Here, | | shows the determinant of the matrix. Also, $\mathbf{R}_t$ and $\overline{\mathbf{h}}_t$ here have the relations shown in Eq. (21) and Eq. (22), respectively.

$$\mathbf{R}_t^{-1} = \frac{\mathbf{s}_t \mathbf{s}_t^T}{\sigma^2} + \mathbf{R}_{t-1}^{-1} \qquad (21)$$

$$\overline{\mathbf{h}}_t = \mathbf{R}_t \left( \frac{\mathbf{s}_t y_t}{\sigma^2} + \mathbf{R}_{t-1}^{-1} \overline{\mathbf{h}}_{t-1} \right) \qquad (22)$$

Eq. (21) and Eq. (22) are introduced not only to compress the equations but also to represent the updating of posterior mean $\overline{\mathbf{h}}_t$ and covariance $\mathbf{R_t}$ at time t. Also, $\overline{\mathbf{h}}_t$ is the optimal Bayesian estimate of the channel impulse response in the case of the received signal and the transmitted symbol being provided at time t.

Returning now to the importance function $q[s_t | s_{0:t-1}^{(i)}, y_{0:t}]$, the importance function q[ ] is chosen by the designer, where the choice is based on a tradeoff between complexity and performance of the algorithm. But the optimal importance function which employs all the information available up to time t in order to propose new sample is

p[ ]. For this reason, the optimal importance function $q[s_t | s_{0:t-1}^{(i)}, y_{0:t}]$ is given as Eq. (23).

$$q[s_t | s_{0:t-1}^{(i)}, y_{0:t}] = p[s_t | s_{0:t-1}^{(i)}, y_{0:t}] \qquad (23)$$

Applying Bayes' theorem to Eq. (23), it is derived that the importance function $q[s_t | s_{0:t-1}^{(i)}, y_{0:t}]$ is proportional to the likelihood $p[y_t | s_t, s_{0:t-1}^{(i)}, y_{0:t-1}]$. This is shown in Eq. (24).

$$q[s_t | s_{0:t-1}^{(i)}, y_{0:t}] \propto p[y_t | s_t, s_{0:t-1}^{(i)}, y_{0:t-1}] \qquad (24)$$

The right-hand side of Eq. (24) is rewritten as Eq. (25) using Eq. (20).

$$p[y_t | s_t, s_{0:t-1}^{(i)}, y_{0:t-1}]$$

$$= \frac{\left| \widetilde{\mathbf{R}}_t^{(i)} \right|^{1/2}}{\left( 2\pi\sigma^2 \left| \mathbf{R}_{t-1}^{(i)} \right| \right)^{1/2}} \exp\left[ -\frac{1}{2} \left\{ \frac{y_t^2}{\sigma^2} + \overline{\mathbf{h}}_{t-1}^{(i)T} \mathbf{R}_{t-1}^{(i)-1} \overline{\mathbf{h}}_{t-1}^{(i)} \right. \right. \qquad (25)$$

$$\left. \left. - \left( \frac{\mathbf{s}_t y_t}{\sigma^2} + \mathbf{R}_{t-1}^{(i)-1} \overline{\mathbf{h}}_{t-1}^{(i)} \right)^T \widetilde{\mathbf{R}}_t^{(i)} \left( \frac{\mathbf{s}_t y_t}{\sigma^2} + \mathbf{R}_{t-1}^{(i)-1} \overline{\mathbf{h}}_{t-1}^{(i)} \right) \right\} \right]$$

However, $\mathbf{s}_t$ and $\mathbf{R}_t^{(i)}$ satisfy Eq. (26) and Eq. (27), respectively.

$$\mathbf{s}_t = \mathbf{T}\mathbf{s}_{t-1}^{(i)} + \mathbf{u}_t \tag{26}$$

$$\widetilde{\mathbf{R}}_t^{(i)-1} = \frac{\mathbf{s}_t \mathbf{s}_t^T}{\sigma^2} + \mathbf{R}_{t-1}^{(i)-1} \tag{27}$$

We rewrite Eq. (25) and Eq. (24) in the form of Eq. (28).

$$q[s_t | s_{0:t-1}^{(i)}, y_{0:t}]$$

$$\propto \frac{\left|\widetilde{\mathbf{R}}_t^{(i)}\right|^{1/2}}{\left(2\pi\sigma^2 \left|\mathbf{R}_{t-1}^{(i)}\right|\right)^{1/2}} \exp\left[-\frac{1}{2}\left\{\frac{y_t^2}{\sigma^2} + \overline{\mathbf{h}}_{t-1}^{(i)T} \mathbf{R}_{t-1}^{(i)-1} \overline{\mathbf{h}}_{t-1}^{(i)} \right.\right. \tag{28}$$

$$\left.\left. -\left(\frac{\mathbf{s}_t y_t}{\sigma^2} + \mathbf{R}_{t-1}^{(i)-1}\overline{\mathbf{h}}_{t-1}^{(i)}\right)^T \widetilde{\mathbf{R}}_t^{(i)}\left(\frac{\mathbf{s}_t y_t}{\sigma^2} + \mathbf{R}_{t-1}^{(i)-1}\overline{\mathbf{h}}_{t-1}^{(i)}\right)\right\}\right]$$

Eq. (28) is specifically solvable. Since the likelihood calculation portion 240 performs the calculation of Eq. (28), the symbol acquisition portion 232 stores the drawn particles. Based on the symbol detection object signal $y_t$, the particles $s_{0:t-1}^{(i)}$ drawn by the symbol acquisition portion 232 for one or a plurality of received signals $y_{0:t-1}$ received prior to $y_t$, and each symbol that constitutes the aforementioned symbol group, for each coordinate position the importance function $q[s_t | s_{0:t-1}^{(i)}, y_{0:t}]$, which is information showing the likelihood of the coordinate position shown by the symbol detection object signal $y_t$, is calculated.

More specifically, first the channel updating portion 245 stores one or a plurality of particles drawn by the symbol acquisition portion 232. Then, based on the stored $s_{0:t-1}^{(i)}$, $\widetilde{\mathbf{R}}_t^{(i)}$ is recursively calculated by Eq. (27), and moreover this $\widetilde{\mathbf{R}}_t^{(i)}$ is used as $\mathbf{R}_t^{(i)}$ to recursively calculate $\overline{\mathbf{h}}_t^{(i)}$ by Eq. (22). In this case, the channel updating portion 245 stores $\widetilde{\mathbf{R}}_t^{(i)}$ ($\mathbf{R}_t^{(i)}$) and $\overline{\mathbf{h}}_t^{(i)}$ in the unit delay portion 246, and by using it realizes the recursive calculation of $\widetilde{\mathbf{R}}_t^{(i)}$ and $\overline{\mathbf{h}}_t^{(i)}$.

The likelihood calculation portion 240 calculates $\mathbf{s}_t$ with Eq. (26). Here, the maximum likelihood detection portion 241 stores the drawn particle in the unit delay portion 244. The likelihood calculation portion 240 performs the computation of Eq. (26) by reading out the particle from the unit delay portion 244. By substituting the computed $\mathbf{s}_t$, the received

signal $y_t$, and the $\widetilde{\mathbf{R}}_t^{(i)}$ and $\overline{\mathbf{h}}_t^{(i)}$ calculated by the channel updating portion 245, the likelihood calculation portion 240 calculates the importance function $q\left[s_t \middle| s_{0:t-1}^{(i)}, y_{0:t}\right]$ for each symbol.

The maximum likelihood detection portion 241, based on the importance function $q\left[s_t \middle| s_{0:t-1}^{(i)}, y_{0:t}\right]$ thus calculated, draws the particle $s_t^{(i)}$ that is shown by the received signal $y_t$. For example, assume a symbol group to be determined by a modulation method is constituted by four symbols X1, X2, X3, and X4, and the aforementioned likelihoods calculated therefor are 0.1, 0.2, 0.3, and 0.4, respectively. In this case, the maximum likelihood detection portion 241 generates, in accordance with the likelihoods, 1, 2, 3, and 4 of four numbers R1, R2, R3, and R4 corresponding to the symbols X1, X2, X3, and X4. One number is selected at random therefrom, and the symbol corresponding to that chosen number is drawn as a particle.

The symbol determination portion 233, based on each particle $s_t^{(i)}$ acquired by the maximum likelihood detection portion 241 of each symbol acquisition portion 232, determines one symbol that is shown by the symbol detection object signal $y_t$. Here, the symbol that is thus determined is represented as $s_t^{(i\max)}$.

In a specific example, each symbol acquisition portion 232 calculates the weight $\widetilde{w}_t^{(i)}$ that is an index showing the proximity degree of drawn particle $s_t^{(i)}$ and $s_t$. The symbol determination portion 233, based on the weight $\widetilde{w}_t^{(i)}$ that is calculated by each symbol acquisition portion 232, determines the symbol $s_t^{(i\max)}$ that is shown by the symbol detection object signal $y_t$. Below, a specific determination method is shown while giving a description of the weight.

The weight $\widetilde{w}_t^{(i)}$ is an index that shows the proximity degree of $s_t^{(i)}$ and $s_t$, and is calculated by Eq. (29).

Here, $\widetilde{w}^{(i)} = \left\{\widetilde{w}_0^{(i)}, \widetilde{w}_1^{(i)}, \cdots, \widetilde{w}_T^{(i)}\right\}$.

$$\widetilde{w}^{(i)} = \frac{p\left[s_{0:T}^{(i)} \middle| y_{0:T}\right]}{q\left[s_{0:T}^{(i)} \middle| y_{0:T}\right]} \qquad (29)$$

Eq. (29) is rewritten as Eq. (30) based on Eq. (11) and Eq. (13).

$$\widetilde{w}_t^{(i)} = w_{t-1}^{(i)} \frac{p\left[y_t \middle| s_{0:t}^{(i)} y_{0:t-1}\right]}{q\left[s_t^{(i)} \middle| s_{0:t-1}^{(i)} y_{0:t}\right]} \qquad (30)$$

$w_t^{(i)}$ is the standardization of $\widetilde{w}_t^{(i)}$ based on $\widetilde{w}_t^{(i)}$, which that is calculated by each symbol acquisition portion 132. This is shown in Eq. (31).

$$w_t^{(i)} = \frac{\widetilde{w}_t^{(i)}}{\sum\limits_{k=1}^{M} \widetilde{w}_t^{(k)}} \tag{31}$$

Here, the importance function $q[s_t|s_{0:t-1}^{(i)}, y_{0:t}]$ can be given as Eq. (32) from Eq. (1) and Eq. (24).

$$q[s_t|s_{0:t-1}^{(i)}, y_{0:t}] = \frac{p[y_t|s_t, s_{0:t-1}^{(i)}, y_{0:t-1}]}{p[y_t|s_t = -1, s_{0:t-1}^{(i)}, y_{0:t-1}] + p[y_t|s_t = +1, s_{0:t-1}^{(i)}, y_{0:t-1}]} \tag{32}$$

When this Eq. (32) is used, Eq. (30) is rewritten as Eq. (33).

$$\widetilde{w}_t^{(i)} = w_{t-1}^{(i)}\left(p[y_t|s_t = -1, s_{0:t-1}^{(i)}, y_{0:t-1}] + p[y_t|s_t = +1, s_{0:t-1}^{(i)}, y_{0:t-1}]\right) \tag{33}$$

$p[y_t|s_t = -1, s_{0:t-1}^{(i)}, y_{0:t-1}] + p[y_t|s_t = +1, s_{0:t-1}^{(i)}, y_{0:t-1}]$ of Eq. (33) becomes the total of the likelihoods calculated by the likelihood calculation portion 240 for each symbol (hereinbelow, this total is referred to as the weight update basic amount). Therefore, the weight update does not depend on the new particle $s_t^{(i)}$ to be added to the particle trajectory $s_{0:t-1}^{(i)}$ and can be carried out in parallel with the drawing step.

The weight updating portion 242 stores that the initial value of the weight $w_0^{(i)} = 1/M$. Then, based on this initial value, Eq. (33) is used to recursively calculate the weigth $\widetilde{w}_t^{(i)}$. In specific terms, the weight $\widetilde{w}_t^{(i)}$ is computed by multiplying the weight update basic amount that is input from the likelihood calculation portion 240 by the weight $w_{t-1}^{(i)}$ which is stored in the unit delay portion 243. Then, the computed weight $\widetilde{w}_t^{(i)}$ is output to the symbol determination portion 233. Also, the weight updating portion 242, in accordance with the weight $\widetilde{w}_t^{(i)}$, stores the weight $w_t^{(i)}$ that is input from the symbol determination portion 233 (the standardized weight) in the unit delay portion 243.

The symbol determination portion 233 standardizes each weigh $\widetilde{w}_t^{(i)}$ that is input from each symbol acquisition portion 232 to be weight $w_t^{(i)}$, respectively. This standardization is performed by Eq. (31). Then, the symbol determination portion 233, based on each weight $w_t^{(i)}$ and the particle $s_t^{(i)}$ that is input from each symbol acquisition portion 232, determines the symbol $s_t^{(i\max)}$ that is shown by the received signal $y_t$. In a specific example, when the weight is updated using Eq. (33) for each received signal in one frame, in consideration of the effects of noise and the like, to the extent of the symbol acquisition portion 232 in which the weight $w_T^{(i)}$ eventually obtained is large, the proximity degree of the drawn particle $s_t^{(i)}$ and $s_t$ increases. Therefore, as shown in Eq. (34), the symbol determination portion 233 finds the i that maximizes weight $w_T^{(i)}$ and is set as imax, and a group of symbols $s_{0:T}^{(i\max)}$, which has been received in the symbol acquisition portion 232-imax from time 0 to T, is acquired as a result of the MAP estimation.

$$i\max = \arg \max_{i=1,2,\cdots,M} \left\{ w_T^i \right\} \tag{34}$$

$s_{0:T}^{(i\max)}$ that is thus acquired becomes a value near $s_{0:T}^{(MAP)}$, which is the preferred result of the MAP estimation.

$$s_{0:T}^{(MAP)} \approx s_{0:T}^{(i\max)} \tag{35}$$

By the way, one major problem with particle filtering is that the discrete random measure degenerates quickly. In other words, all symbol acquisition portions 232 except for a very few are assigned negligible weights. Thus, the resampling portion 234 performs resampling each time a weight is calculated in each symbol acquisition portion 232. Resampling is a scheme to avoid this problem by eliminating symbol acquisition portions 232 with small weights (negligible weights) and replicating symbol acquisition portions 232 with large weights (considerable weights) every time the effective sample size Eq. (36) goes below a certain threshold ξ. In a specific example, the resampling portion 234 replaces each quantity ($s_{0:t-1}^{(i)}$, $w_{t-1}^{(i)}$, $\mathbf{R}_{t-1}^{(i)}$, $\overline{\mathbf{h}}_{t-1}^{(i)}$, etc.) that is stored in the portions of the symbol acquisition portions 232 with small weights (negligible weights) with those stored in any of the symbol acquisition portions 232 with large weights (considerable weights).

$$M_{eff} = \frac{1}{\sum_{k=1}^{M} \left\{ w_t^{(k)} \right\}^2} < \xi \tag{36}$$

Next, the processing performed in the demodulation portion 13 shall be explained in detail while making comparisons with the background art.

One of the performance degradation factors in the implementation of high-speed wireless systems, as stated above, the impairment caused by the analog processing due to component imperfection. In most cases, such impairments cannot be efficiently nor entirely eliminated in the analog domain due to power-area-cost trade-offs. Therefore, efficient compensation techniques in the digital baseband domain are needed for the receiver 10. A significant source of impairments in high- frequency wireless communications systems is the imbalance between the In-phase (I) and Quadrature-phase (Q) components; the real and imaginary parts of the complex signal. This imbalance is introduced during the frequency up-conversion at the transmitter 20 and/or the down-conversion at the receiver 10, and severely degrades the performance of the detection.

When considering the application of the conventional blind equalization method via PF to such high-speed wireless systems, since the state-space model used in the method implicitly assume the equal power balance and the orthogonality between the I and Q branches, performances of the equalizer will be seriously deteriorated due to such IQ imbalances. Meanwhile, PF methodology itself has the potential for coping with such non-linear problems and the conventional PF method can be modified so that it becomes possible to eliminate the effect of the IQ imbalance. In the present embodiment, the state-space model is reformulated in order to introduce the effect of the IQ imbalance.

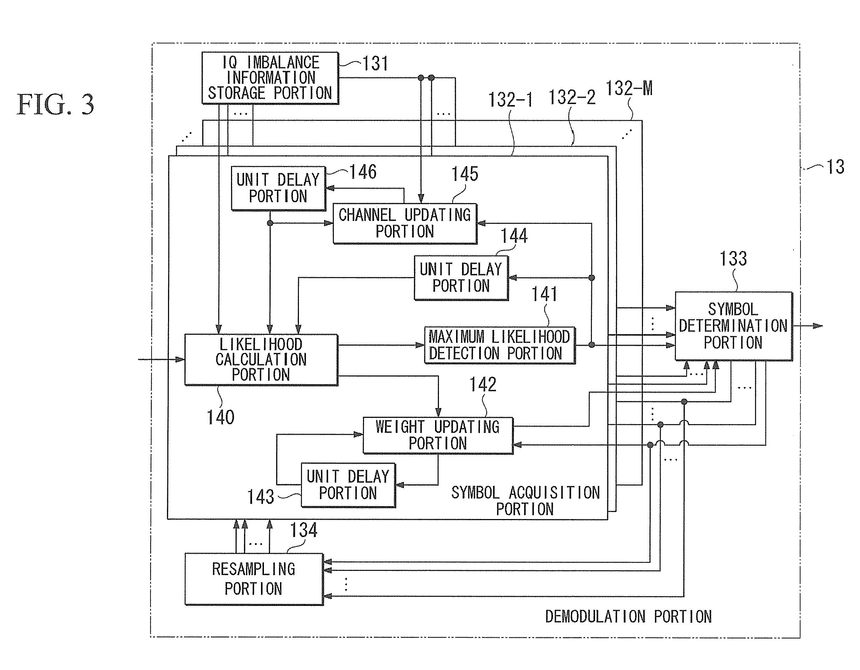

An explanation in concrete terms is given below. FIG. 3 is a schematic block diagram showing the internal constitution of the demodulation portion 13. As shown in the drawing, the demodulation portion 13 is constituted to include an IQ imbalance information storage portion 131; M symbol acquisition portions 132-1, 132-2,..., 132-M; a symbol determination portion 133; and a resampling portion 134. Hereinbelow, the symbol acquisition portions 132-1, 132-2,..., 132-M are generically referred to symbol acquisition portions 132.

Each symbol acquisition portion 132 is constituted to include therein a likelihood calculation portion 140, a maximum likelihood detection portion 141, a weight updating portion 142, a unit delay portion 143, a unit delay portion 144, a channel updating portion 145, and a unit delay portion 146. The unit delay portion 143, the unit delay portion 144, and the unit delay portion 146 are all storage means that are provided with a storage region of a specified size.

The processing of the symbol acquisition portions 132, the symbol determination portion 133, and the resampling portion 134 are basically identical to those of the symbol acquisition portions 232, the symbol determination portion 233, and the resampling portion 234 described above, therefore, the explanation below will focus on the points of difference. In the following explanation, since it is necessary to explain by taking up the state in which there is an IQ imbalance, the definition of the transmitted symbol $s_t$ shown in Eq. (37) will be used instead that shown in Eq. (1). The transmitted symbol $s_t$ shown in Eq. (37) is a differentially coded N-ary phase shift keying (PSK) symbol utilized in wireless communication over frequency-selective fading channels.

$$s_t \in A, \quad A = \{a_n | n = 1, 2, \cdots, N\}, \quad t = 0, 1, 2, \cdots \qquad (37)$$

The transmitted symbol $S_t$ suffers from IQ imbalance both at the transmitter 20 and the receiver 10. All IQ distortion parameters are assumed to be known to the receiver 10 and real values $\varepsilon_1$ and $\phi_1$ denote the amplitude imbalance and the phase imbalance between the I and Q branches introduced at the transmitter. The complex baseband equation of a transmitted symbol $s_t^d$ that is influenced by the IQ imbalance shown by $\varepsilon_1$ and $\phi_1$ is given by Eq. (3 8).

$$s_t^d = (1+\varepsilon_1)\cos(\phi_1)\Re\{s_t\} - (1+\varepsilon_1)\sin(\phi_1)\Im\{s_t\}$$
$$- i \cdot (1-\varepsilon_1)\sin(\phi_1)\Re\{s_t\} + i \cdot (1-\varepsilon_1)\cos(\phi_1)\Im\{s_t\} \qquad (38)$$

$\Re\{\ \}$ denotes the real part and $\Im\{\ \}$ the imaginary part. Also, from Eq. (3), the received signal $y_t$ before being IQ distorted at the receiver 10, is given by Eq. (39).

$$y_t = \sum_{l=0}^{L-1} h_l s_{t-l}^d + n_t \tag{39}$$

As the same manner as in Eq. (38), the IQ distorted received signal $y_t^d$ at the receiver 10 can be given as Eq. (40).

$$y_t^d = (1+\varepsilon_2)\cos(\phi_2)\Re\{y_t\} - (1+\varepsilon_2)\sin(\phi_2)\Im\{y_t\}$$
$$- i \cdot (1-\varepsilon_2)\sin(\phi_2)\Re\{y_t\} + i \cdot (1-\varepsilon_2)\cos(\phi_2)\Im\{y_t\} \tag{40}$$

here $\varepsilon_2$ and $\phi_2$ denote the amplitude imbalance and the phase imbalance at the receiver 10, respectively.

In the explanation below, $\mathbf{s}_t$, which is defined in Eq. (4) to show all the transmitted symbols from time t - L + 1 to time t, and channel vector $\mathbf{h}$, which is defined in Eq. (7), are respectively redefined by Eq. (41) and Eq. (42). In this case, $\mathbf{s}_t \in R^{2L \times 1}$ and $\mathbf{h}_t \in R^{2L \times 1}$,

$$\mathbf{s}_t = [\Re\{s_t\} \cdots \Re\{s_{t-L+1}\} \quad \Im\{s_t\} \cdots \Im\{s_{t-L+1}\}]^T \tag{41}$$

$$\mathbf{h} = [\Re\{h_0\} \cdots \Re\{h_{L-1}\} \quad \Im\{h_0\} \cdots \Im\{h_{L-1}\}]^T \tag{42}$$

Vector $\mathbf{y}_t$ that indicates the received signal $y_t$, vector $\mathbf{n}_t$ that indicates the noise $n_t$, vector $\mathbf{s}_t^d$ that indicates the aforementioned $s_t^d$, and vector $\mathbf{y}_t^d$ that indicates the aforementioned $y_t^d$ are defined as in the equations Eq. (42) to Eq. (46). In this case, $\mathbf{y}_t \in R^{2\times1}$ $\mathbf{n}_t \in R^{2\times1}$, $s_t^d \in R^{2L\times1}$, and $\mathbf{y}_t^d \in R^{2\times1}$.

$$\mathbf{y}_t = [\Re\{y_t\} \quad \Im\{y_t\}]^T \tag{43}$$

$$\mathbf{n}_t = [\Re\{n_t\} \quad \Im\{n_t\}]^T \tag{44}$$

$$\mathbf{s}_t^d = [\Re\{s_t^d\} \cdots \Re\{s_{t-L+1}^d\} \quad \Im\{s_t^d\} \cdots \Im\{s_{t-L+1}^d\}]^T \tag{45}$$

$$\mathbf{y}_t^d = [\Re\{y_t^d\} \quad \Im\{y_t^d\}]^T \tag{46}$$

Also, the matrix $\mathbf{D}_1 \in R^{2L \times 2L}$ is set as Eq. (47) and matrix $\mathbf{D}_2 \in R^{2 \times 2}$ is set as Eq. (48).

$$\mathbf{D}_1 = \begin{bmatrix} (1+\varepsilon_1)\cos(\phi_1)\cdot\mathbf{I}_L & -(1+\varepsilon_1)\sin(\phi_1)\cdot\mathbf{I}_L \\ -(1-\varepsilon_1)\sin(\phi_1)\cdot\mathbf{I}_L & (1-\varepsilon_1)\cos(\phi_1)\cdot\mathbf{I}_L \end{bmatrix} \tag{47}$$

$$\mathbf{D}_2 = \begin{bmatrix} (1+\varepsilon_2)\cos(\phi_2) & -(1+\varepsilon_2)\sin(\phi_1) \\ -(1-\varepsilon_2)\sin(\phi_2) & (1-\varepsilon_2)\cos(\phi_2) \end{bmatrix} \tag{48}$$

Using these representations, the IQ distorted transmitted symbol $\mathbf{s}_t^d$ at the transmitter 20 and the IQ distorted received signal $\mathbf{y}_t^d$ at the receiver 10 can be expressed by Eq. (49) and Eq. (50), respectively.

$$\mathbf{s}_t^d = \mathbf{D}_1\mathbf{s}_t \tag{49}$$

$$\mathbf{y}_t^d = \mathbf{D}_2\mathbf{y}_t \tag{50}$$

Also, Eq. (39) is rewritten as Eq. (51).

$$\mathbf{y}_t = \begin{bmatrix} (\mathbf{Z}_1\mathbf{h})^T \\ (\mathbf{Z}_2\mathbf{h})^T \end{bmatrix}\mathbf{s}_t^d + \mathbf{n}_t \tag{51}$$

$\mathbf{Z}_1$ and $\mathbf{Z}_2$ are both matrixes of $2L \times 2L$, and the content thereof is indicated by Eq. (52) and Eq. (53).

$$\mathbf{Z}_1 = \begin{bmatrix} \mathbf{I}_L & \mathbf{0}_{L\times L} \\ \mathbf{0}_{L\times L} & -\mathbf{I}_L \end{bmatrix} \tag{52}$$

$$\mathbf{Z}_2 = \begin{bmatrix} \mathbf{0}_{L \times L} & \mathbf{I}_L \\ \mathbf{I}_L & \mathbf{0}_{L \times L} \end{bmatrix} \qquad (53)$$

By using these equations, the distorted received signal $\mathbf{y}_t^d$ can be rewritten as Eq. (54). This is an observation equation that corresponds to Eq. (3).

$$\mathbf{y}_t^d = \mathbf{D}_2 \begin{bmatrix} (\mathbf{Z}_1 \mathbf{h})^T \\ (\mathbf{Z}_2 \mathbf{h})^T \end{bmatrix} \mathbf{D}_1 \mathbf{s}_t + \mathbf{D}_2 \mathbf{n}_t \qquad (54)$$

Also, the state equation that corresponds to Eq. (2) can be written as Eq. (55).

$$\mathbf{s}_t = \mathbf{F} \mathbf{s}_{t-1} + \mathbf{u}_t \qquad (55)$$

However, **F** is a 2L × 2L matrix that is called a state-transition matrix, with the content thereof shown in Eq. (56).

$$\mathbf{F} = \begin{bmatrix} \mathbf{0}_{1 \times L-1} & \mathbf{0}_{1 \times 1} & \mathbf{0}_{1 \times L-1} & \mathbf{0}_{1 \times 1} \\ \mathbf{I}_{L-1} & \mathbf{0}_{L-1 \times 1} & \mathbf{I}_{L-1} & \mathbf{0}_{L-1 \times 1} \end{bmatrix} \qquad (56)$$

Also, $\mathbf{u}_t$ is a 2L × 1 vector that is called the state perturbation, and is shown by Eq. (57). The transmitted symbols $S_t$ are uniform random variables and, for example, satisfy $s_t \sim U(A)$. However, U( ) is a uniform distribution. Moreover, $\mathbf{u}_t$ is independent from previous and future symbols.

$$\mathbf{u}_t = [\Re\{s_t\} 0 \cdots 0 \quad \Im\{s_t\} 0 \cdots 0]^T \qquad (57)$$

Assuming IQ imbalances, Eq. (12) becomes Eq. (58).

$$s_t^{(i)} \sim q[s_t | s_{0:t-1}^{(i)}, y_{0:t}^d] \qquad (58)$$

This $q[s_t | s_{0:t-1}^{(i)}, y_{0:t}^d]$ is an IQ imbalance-type importance function that is compatible with IQ imbalances. Below, the specifically solvable IQ imbalance-type importance function $q[s_t | s_{0:t-1}^{(i)}, y_{0:t}^d]$ is found. First, $p[s_{0:T}|y_{0:T}^d]$ has a relation of Eq. (59) corresponding to Eq. (13).

$$p[s_{0:t}|y_{0:t}^d] = p[s_{0:t}|y_{0:t-1}^d, y_t]$$

$$= \frac{p[y_t^d|s_{0:t}, y_{0:t-1}^d]p[s_{0:t-1}|y_{0:t-1}^d]}{p[y_t^d|y_{0:t-1}^d]} \quad (59)$$

$$\propto p[y_t^d|s_{0:t}, y_{0:t-1}^d]p[s_{0:t-1}|y_{0:t-1}^d]$$

Assuming the right-hand side first item of Eq. (59) is expressed as in Eq. (14), it becomes Eq. (60).

$$p[y_t^d|s_{0:t}, y_{0:t-1}^d] = \int_{R^{2L}} p[\mathbf{y}_t^d|\mathbf{h}, \mathbf{s}_t]p[\mathbf{h}|s_{0:t-1}, y_{0:t-1}^d]d\mathbf{h} \quad (60)$$

The first item in the integrand on the right-hand side of Eq. (60) is rewritten as shown in Eq. (61). In other words, it follows a Gauss distribution.

$$p[\mathbf{y}_t^d|\mathbf{h}, \mathbf{s}_t] = N\left(\mathbf{D}_2 \begin{bmatrix} (\mathbf{Z}_1\mathbf{h})^T \\ (\mathbf{Z}_2\mathbf{h})^T \end{bmatrix} \mathbf{D}_1\mathbf{s}_t, \frac{\sigma^2}{2}\mathbf{D}_2\mathbf{D}_2^T\right)$$

$$= N\left(\mathbf{D}_2 \begin{bmatrix} \mathbf{s}_t^T \mathbf{D}_1^T \mathbf{Z}_1 \\ \mathbf{s}_t^T \mathbf{D}_1^T \mathbf{Z}_2 \end{bmatrix} \mathbf{h}, \frac{\sigma^2}{2}\mathbf{D}_2\mathbf{D}_2^T\right) \quad (61)$$

$$= N(\mathbf{U}_t\mathbf{h}, \mathbf{V})$$

$\mathbf{U_t}$ and $\mathbf{V}$ are given by Eq. (62) and Eq. (63), respectively.

$$\mathbf{U}_t = \mathbf{D}_2 \begin{bmatrix} \mathbf{s}_t^T \mathbf{D}_1^T \mathbf{Z}_1 \\ \mathbf{s}_t^T \mathbf{D}_1^T \mathbf{Z}_2 \end{bmatrix} \quad (62)$$

$$\mathbf{V} = \frac{\sigma^2}{2}\mathbf{D}_2\mathbf{D}_2^T \quad (63)$$

On the other hand, similarly to Eq. (16), it is useful to realize that the probability density function $p[\mathbf{h}|s_{0:t}, y_{0:t}]$ of the channel vector is proportional to the second item in the integrand of the right-hand side of Eq. (63). This is shown in Eq. (64).

$$p[\mathbf{h}|s_{0:t}, y_{0:t}^d] \propto p[\mathbf{y}_t^d|\mathbf{h}, \mathbf{s}_t] p[\mathbf{h}|s_{0:t-1}, y_{0:t-1}^d] \qquad (64)$$

Here, when the assumption of Eq. (17) is used, the second item of the right-hand side ofEq. (64) is expressed as Eq. (65) and the left-hand side is given as Eq. (66).

$$p[\mathbf{h}|s_{0:t-1}, y_{0:t-1}^d] \sim N\left(\overline{\mathbf{h}}_{t-1}, \mathbf{R}_{t-1}\right) \qquad (65)$$

$$p[\mathbf{h}|s_{0:t}, y_{0:t}^d] \sim N\left(\overline{\mathbf{h}}_t, \mathbf{R}_t\right) \qquad (66)$$

As a result, since both pdfs in the integrand of Eq. (60) are Gaussian, their product is also Gaussian and can be analytically found as Eq. (67).

$$p[y_t^d|s_{0:t}, y_{0:t-1}^d]$$

$$= \frac{|\mathbf{R}_t|^{\frac{1}{2}}}{2\pi|\mathbf{R}_{t-1}|^{\frac{1}{2}}|\mathbf{V}|^{\frac{1}{2}}} \exp\left[-\frac{1}{2}\left\{\mathbf{y}_t^{dT}\mathbf{V}^{-1}\mathbf{y}_t^d + \overline{\mathbf{h}}_{t-1}^T\mathbf{R}_{t-1}^{-1}\overline{\mathbf{h}}_{t-1} \qquad (67)\right.\right.$$

$$\left.\left. -\left(\mathbf{U}_t^T\mathbf{V}^{-1}\mathbf{y}_t^d + \mathbf{R}_{t-1}^{-1}\overline{\mathbf{h}}_{t-1}\right)^T \mathbf{R}_t^{-1}\left(\mathbf{U}_t^T\mathbf{V}^{-1}\mathbf{y}_t^d + \mathbf{R}_{t-1}^{-1}\overline{\mathbf{h}}_{t-1}\right)\right\}\right]$$

Here, | | shows the determinant of the matrix. Also, $\mathbf{R}_t$ and $\overline{\mathbf{h}}_t$ here have the relations shown in Eq. (68) and Eq. (69), respectively.

$$\mathbf{R}_t^{-1} = \mathbf{U}_t^T\mathbf{V}^{-1}\mathbf{U}_t + \mathbf{R}_{t-1}^{-1} \qquad (68)$$

$$\overline{\mathbf{h}}_t = \mathbf{R}_t\left(\mathbf{U}_t^T\mathbf{V}^{-1}\mathbf{y}_t^d + \mathbf{R}_{t-1}^{-1}\overline{\mathbf{h}}_{t-1}\right) \qquad (69)$$

Returning now to the importance function $q[s_t | s_{0:t-1}^{(i)}, y_{0:t}^d]$, similarly to Eq. (23) and Eq. (24), the optimal $q[s_t | s_{0:t-1}^{(i)}, y_{0:t}^d]$ is given as Eq. (70).

$$q[s_t | s_{0:t-1}^{(i)}, y_{0:t}^d] = p[s_t | s_{0:t-1}^{(i)}, y_{0:t}^d] \propto p[y_t^d | s_t, s_{0:t-1}^{(i)}, y_{0:t-1}^d] \quad (70)$$

The right-hand side of Eq. (70) is rewritten as Eq. (71) using Eq. (67).

$$p[y_t^d | s_t, s_{0:t-1}^{(i)}, y_{0:t-1}^d]$$

$$= \frac{\left|\widetilde{\mathbf{R}}_t^{(i)}\right|^{\frac{1}{2}}}{2\pi \left|\mathbf{R}_{t-1}^{(i)}\right|^{\frac{1}{2}} |\mathbf{V}|^{\frac{1}{2}}} \exp\left[ -\frac{1}{2}\left\{ \mathbf{y}_t^{dT}\mathbf{V}^{-1}\mathbf{y}_t^d + \overline{\mathbf{h}}_{t-1}^{(i)T}\mathbf{R}_{t-1}^{-1}\overline{\mathbf{h}}_{t-1}^{(i)} \right. \right. \quad (71)$$

$$\left. \left. -\left(\widetilde{\mathbf{U}}_t^{(i)T}\mathbf{V}^{-1}\mathbf{y}_t^d + \mathbf{R}_{t-1}^{(i)-1}\overline{\mathbf{h}}_{t-1}^{(i)}\right)^T \widetilde{\mathbf{R}}_t^{(i)-1}\left(\widetilde{\mathbf{U}}_t^{(i)T}\mathbf{V}^{-1}\mathbf{y}_t^d + \mathbf{R}_{t-1}^{(i)-1}\overline{\mathbf{h}}_{t-1}^{(i)}\right)\right\} \right]$$

$\widetilde{\mathbf{U}}_t^{(i)}$ satisfies Eq. (72) and $\mathbf{R}_t^{(i)}$ satisfies Eq. (73).

$$\widetilde{\mathbf{U}}_t^{(i)} = \mathbf{D}_2 \begin{bmatrix} \widetilde{\mathbf{s}}_t^{(i)T}\mathbf{D}_1^T\mathbf{Z}_1 \\ \widetilde{\mathbf{s}}_t^{(i)T}\mathbf{D}_1^T\mathbf{Z}_2 \end{bmatrix} \quad (72)$$

$$\widetilde{\mathbf{R}}_t^{(i)-1} = \widetilde{\mathbf{U}}_t^{(i)T}\mathbf{V}^{-1}\widetilde{\mathbf{U}}_t^{(i)} + \mathbf{R}_{t-1}^{(i)-1} \quad (73)$$

Here, $\widetilde{\mathbf{s}}_t^{(i)}$ is given by Eq. (74).

$$\widetilde{\mathbf{s}}_t^{(i)} = [\Re\{s_t\} \Re\{s_{t-1}^{(i)}\} \cdots \Re\{s_{t-L+1}^{(i)}\} \quad \Im\{s_t\} \Im\{s_{t-1}^{(i)}\} \cdots \Im\{s_{t-L+1}^{(i)}\}]^T \quad (74)$$

From Eq. (71), Eq. (70) is rewritten as Eq. (75).

$$q[s_t | s_{0:t-1}^{(i)}, y_{0:t}^d]$$

$$\propto \frac{\left| \widetilde{\mathbf{R}}_t^{(i)} \right|^{\frac{1}{2}}}{2\pi \left| \mathbf{R}_{t-1}^{(i)} \right|^{\frac{1}{2}} |\mathbf{V}|^{\frac{1}{2}}} \exp\left[ -\frac{1}{2} \left\{ \mathbf{y}_t^{dT} \mathbf{V}^{-1} \mathbf{y}_t^d + \bar{\mathbf{h}}_{t-1}^{(i)T} \mathbf{R}_{t-1}^{-1} \bar{\mathbf{h}}_{t-1}^{(i)} \right. \right. \tag{75}$$

$$\left. \left. - \left( \widetilde{\mathbf{U}}_t^{(i)T} \mathbf{V}^{-1} \mathbf{y}_t^d + \mathbf{R}_{t-1}^{(i)-1} \bar{\mathbf{h}}_{t-1}^{(i)} \right)^T \widetilde{\mathbf{R}}_t^{(i)-1} \left( \widetilde{\mathbf{U}}_t^{(i)T} \mathbf{V}^{-1} \mathbf{y}_t^d + \mathbf{R}_{t-1}^{(i)-1} \bar{\mathbf{h}}_{t-1}^{(i)} \right) \right\} \right]$$

Eq. (75) is specifically solvable. Therefore, the likelihood calculation portion 140, based on the symbol detection object signal $y_t^d$; IQ imbalance information $\varepsilon_1$, $\phi_1$, $\varepsilon_2$, and $\phi_2$ showing the amount of IQ imbalance; and the symbols that constitute the aforementioned symbol group calculates the IQ imbalance-type importance function $q[s_t | s_{0:t-1}^{(i)}, y_{0:t}^d]$ (Eq. 75), which is information showing the likelihood as a symbol shown by the symbol detection object signal $y_t^d$.   In specific terms, the likelihood calculation portion 140, based moreover on particles $s_{0:t-1}^{(i)}$ drawn by the symbol acquisition portions 132 for one or a plurality of received signals $y_{0:t-1}^d$ received by $y_t^d$, calculates the IQ imbalance-type importance function $q[s_t | s_{0:t-1}^{(i)}, y_{0:t}^d]$ for each of the aforementioned symbols.

In more concrete terms, the IQ imbalance information storage portion 131 stores in advance the IQ imbalance information $\varepsilon_1$, $\phi_1$, $\varepsilon_2$, and $\phi_2$ showing the amount of IQ imbalance that occurs in at least one of the phase and amplitude of the received signal.

The channel updating portion 145 stores the particles drawn by the symbol acquisition portions 132. Then, based on the stored $s_{0:t-1}^{(i)}$, $\widetilde{\mathbf{R}}_t^{(i)}$ is recursively calculated by Eq. (73), and moreover this $\widetilde{\mathbf{R}}_t^{(i)}$ is used as $\mathbf{R}_t^{(i)}$, to recursively calculate $\bar{\mathbf{h}}_t^{(i)}$ by Eq. (69). In this case, the channel updating portion 145 stores $\widetilde{\mathbf{R}}_t^{(i)}$ ( $\mathbf{R}_t^{(i)}$ ) and $\bar{\mathbf{h}}_t^{(i)}$ in the unit delay portion 146, and by using it realizes the recursive calculation of $\widetilde{\mathbf{R}}_t^{(i)}$ and $\bar{\mathbf{h}}_t^{(i)}$. Also, in the calculation of $\widetilde{\mathbf{R}}_t^{(i)}$ and $\bar{\mathbf{h}}_t^{(i)}$, the IQ imbalance information $\varepsilon_1$, $\phi_1$, $\varepsilon_2$, and $\phi_2$ are required, with the channel updating portion 145 using them by reading them out from the IQ imbalance information storage portion 131.

The likelihood calculation portion 140 acquires the symbol $\widetilde{s}_t^{(i)}$ by Eq. (74). Here, the maximum likelihood detection portion 141 stores the drawn particle in the unit delay portion 144. The likelihood calculation portion 140 sequentially reads out particles from the unit delay portion 144 to store $s_{0:t-1}^{(i)}$, and based on the stored $s_{0:t-1}^{(i)}$, acquires the symbol $\widetilde{s}_t^{(i)}$. By substituting the acquired $\widetilde{s}_t^{(i)}$, the received signal $\mathbf{y}_t^d$, the IQ imbalance information $\varepsilon_1$,

$\phi_1$, $\varepsilon_2$, and $\phi_2$ stored in the IQ imbalance information storage portion 131, and the $\widetilde{\mathbf{R}}_t^{(i)}$ and $\overline{\mathbf{h}}_t^{(i)}$ calculated by the channel updating portion 145 into Eq. (71), the likelihood calculation portion 140 calculates the IQ imbalance-type importance function $q[s_t|s_{0:t-1}^{(i)}, y_{0:t}^d]$ for each symbol.

The maximum likelihood detection portion 141, based on the IQ imbalance-type importance function $q[s_t|s_{0:t-1}^{(i)}, y_{0:t}^d]$ that is thus calculated, draws the particle $s_t^{(i)}$ that is shown by the symbol detection object signal $\mathbf{y}_t^d$ by the same process as the maximum likelihood detection portion 241.

The symbol determination portion 133, based on each particle $s_t^{(i)}$ acquired by the maximum likelihood detection portion 141 of each symbol acquisition portion 132, determines the coordinate position $s_t^{(i\,\mathrm{max})}$ that is shown by the symbol detection object signal $\mathbf{y}_t^d$. In a specific example, each symbol acquisition portion 132 calculates the weight $\widetilde{w}_t^{(i)}$ that is an index showing the proximity degree of drawn particle $s_t^{(i)}$ and $s_t$. The symbol determination portion 133, based on the weight $\widetilde{w}_t^{(i)}$ that is calculated by each symbol acquisition portion 132, determines the coordinate position $s_t^{(i\,\mathrm{max})}$ that is shown by the symbol detection object signal $\mathbf{y}_t^d$. Below, a specific determination method is shown while giving a description of the weight $\widetilde{w}_t^{(i)}$.

Here, the weight $\widetilde{w}_t^{(i)}$ is an index that shows the proximity degree of $s_t^{(i)}$ and $s_t$, and is calculated by Eq. (76) similarly to Eq. (30).

$$\widetilde{w}_t^{(i)} = w_{t-1}^{(i)} \frac{p[y_t|s_{0:t}^{(i)} y_{0:t-1}^d]}{q[s_t^{(i)}|s_{0:t-1}^{(i)} y_{0:t}^d]} \tag{76}$$

$w_t^{(i)}$ is the standardization of $\widetilde{w}_t^{(i)}$ based on $\widetilde{w}_t^{(i)}$, which that is calculated by each symbol acquisition portion 132.

Here, the IQ imbalance-type importance function $q[s_t|s_{0:t-1}^{(i)}, y_{0:t}^d]$ can be given as Eq. (77) from Eq. (37) and Eq. (70).

$$q[s_t \mid s_{0:t-1}^{(i)}, y_{0:t}^d] = \frac{p[y_t^d \mid s_t, s_{0:t-1}^{(i)}, y_{0:t-1}^d]}{\sum_{n=1}^{N} p[y_t^d \mid s_t = a_n, s_{0:t-1}^{(i)}, y_{0:t-1}^d]} \qquad (77)$$

When this Eq. (77) is used, Eq. (76) is rewritten as Eq. (78).

$$\widetilde{w}_t^{(i)} = w_{t-1}^{(i)} \sum_{n=1}^{N} p[y_t^d \mid s_t = a_n, s_{0:t-1}^{(i)}, y_{0:t-1}^d] \qquad (78)$$

$\sum_{n=1}^{N} p[y_t^d \mid s_t = a_n, s_{0:t-1}^{(i)}, y_{0:t-1}^d]$ of Eq. (78) becomes the total (i.e., weight update basic amount) of the likelihoods calculated by the likelihood calculation portion 140 for each symbol. Therefore, the weight update does not depend on the new particle $s_t^{(i)}$ to be added to the particle trajectory $s_{0:t-1}^{(i)}$ and can be carried out in parallel with the drawing step.

The weight updating portion 142 stores that the initial value of the weight $w_0^{(i)} = 1/M$. Then, based on this initial value, Eq. (78) is used to recursively calculate the weight $\widetilde{w}_t^{(i)}$. In specific terms, the weight $\widetilde{w}_t^{(i)}$ is computed by multiplying the weight update basic amount that is input from the likelihood calculation portion 140 by the weight $w_{t-1}^{(i)}$ which is stored in the unit delay portion 143. Then, the computed weight $\widetilde{w}_t^{(i)}$ is output to the symbol determination portion 133. Also, the weight updating portion 142, in accordance with the weight $\widetilde{w}_t^{(i)}$, stores the weight $w_t^{(i)}$ that is input from the symbol determination portion 133 (the standardized weight) in the unit delay portion 143.

The symbol determination portion 133 standardizes each weight $\widetilde{w}_t^{(i)}$ that is input from each symbol acquisition portion 132 to serve as weight $w_t^{(i)}$, respectively. This standardization is performed by Eq. (31). Then, the symbol determination portion 133, based on each weight $w_t^{(i)}$ (the amount based on the likelihood total value) and the particle $s_t^{(i)}$ that is input from each symbol acquisition portion 132, determines the symbol $s_t^{(i\max)}$ that is shown by the received signal $y_t^d$. Specifically, the symbol determination portion 133, as shown in Eq. (34), finds the i that maximizes weight $w_T^{(i)}$ and is set as imax, and a group of symbols $s_{0:T}^{(i\max)}$, which has been received in the symbol acquisition portion 232-imax from time 0 to T, is acquired as a result of the MAP estimation. This $s_{0:T}^{(i\,\mathrm{max})}$,

as shown in Eq. (32), becomes a value near $s_{0:T}^{(MAP)}$, which is the preferred result of the MAP estimation.

The resampling portion 134 performs resampling each time a weight is calculated in each symbol acquisition portion 132. Resampling is a scheme to avoid this problem by eliminating symbol acquisition portions 132 with small weights (negligible weights) and replicating symbol acquisition portions 132 with large weights (considerable weights) every time the effective sample size Eq. (33) goes below a certain threshold ξ. In a specific example, the resampling portion 134 replaces each quantity ($s_{0:t-1}^{(i)}$, $w_{t-1}^{(i)}$, $\mathbf{R}_{t-1}^{(i)}$, $\overline{\mathbf{h}}_{t-1}^{(i)}$, etc.) that is stored in the portions of the symbol acquisition portions 132 with small weights (negligible weights) with those stored in any of the symbol acquisition portions 132 with large weights (considerable weights).

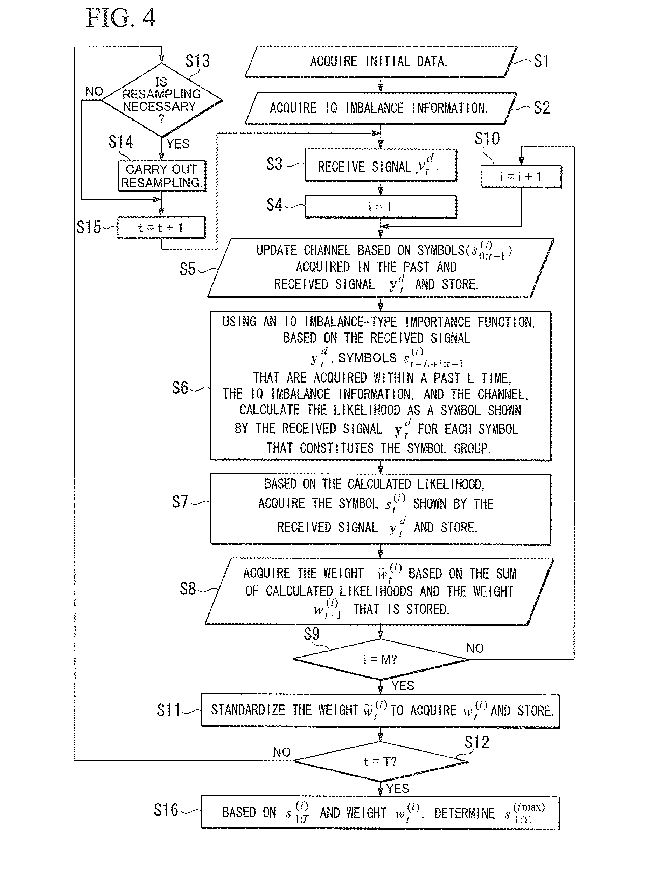

FIG. 4 is a flowchart that shows the process flow of the demodulation portion 13. As shown in the same drawing, the demodulation portion 13 first acquires the initial data (Step S1). This initial data consists of the mean $\overline{\mathbf{h}}_{-1}$, the distribution $\mathbf{R}_{-1}$, the number M of symbol acquisition portions 132, and variable t = 1. Also, the demodulation portion 13 acquires the IQ imbalance information $\varepsilon_1$, $\phi_1$, $\varepsilon_2$, and $\phi_2$ (Step S2).

The demodulation portion 13 receives the symbol $\mathbf{y}_t^d$ (Step S3), ensures the storage area for variable i, and substitutes 1 for i (Step S4). Then, the channels ($\widetilde{\mathbf{R}}_t^{(i)}$ and $\overline{\mathbf{h}}_t^{(i)}$) are first updated based on the symbols $s_{0:t-1}^{(i)}$

acquired until then and the received signal $\mathbf{y}_t^d$, and stored (Step S5). Next, based on the received signal $\mathbf{y}_t^d$,

symbols $s_{t-L+1:t-1}^{(i)}$ ($\widetilde{\mathbf{s}}_t^{(i)}$) that are acquired within a past L time, the IQ imbalance information $\varepsilon_1$, $\phi_1$, $\varepsilon_2$, and

$\phi_2$, and the channels ($\widetilde{\mathbf{R}}_t^{(i)}$ and $\overline{\mathbf{h}}_t^{(i)}$) acquired in Step S5, the demodulation portion 13, using the IQ imbalance-type importance function $q[s_t | s_{0:t-1}^{(i)}, y_{0:t}^d]$, calculates the likelihood for each symbol that constitutes the symbol group of being the symbol shown by the received signal $\mathbf{y}_t^d$ (Step S6).

Next, the demodulation portion 13, based on the calculated likelihoods, acquires one symbol $s_t^{(i)}$ that is

shown by the received signal and stores it (Step S7). Also, the demodulation portion 13 acquires the weight $\widetilde{w}_t^{(i)}$

based on the sum of calculated likelihoods and the weight $w_{t-1}^{(i)}$ that is stored (Step S8).

When the aforementioned processing is completed, the demodulation portion 13 determines whether or not i = M (Step S9). If true, i is incremented by 1 (Step S 10), and the processing returns to Step S5. On the other hand, if not true, the weight $\widetilde{w}_t^{(i)}$ is standardized and $w_t^{(i)}$ is acquired and stored (Step S11).

Next, the demodulation portion 13 determines whether or not t = T (Step S12). If true, based on each weight

$w_t^{(i)}$, it is determined whether or not resampling is required (Step S 13). In the case of resampling being determined to be required, the demodulation portion 13 performs resampling (Step S14), increments t by 1 (Step S15), and the processing returns to Step S3. On the other hand, if determined to be not required, the demodulation portion 13 increments t by 1 (Step S15) and the processing returns to Step S3.

In the case of being judged as true in Step S16 columns, the demodulation portion 13 determines $s_{1:T}^{(i\max)}$

based on $s_{1:T}^{(i)}$, which is acquired by each symbol acquisition portion 132 from t = 1 to t = T, and $w_T^{(i)}$, which is the

standardization of $\widetilde{w}_T^{(i)}$ that is ultimately acquired by each symbol acquisition portion 132.

As explained above, according to the present embodiment, since the likelihood is calculated based on the IQ imbalance information, it is possible to prevent degradation of the accuracy of the coordinate position acquisition processing by an IQ imbalance that occurs in the phase and amplitude of the received signal.

Also, the receiver 10, using symbols obtained in the past for a plurality of signals sequentially received, can calculate the likelihood based on the IQ imbalance amount information.

Moreover, using the weight, for each symbol acquisition portion 132 the correctness of the symbol detected as a symbol that is shown by the symbol detection object signal is evaluated, and so it is possible to determine one symbol.

The effects yielded by the aforementioned structure of the radio transmission system 1 are shown here by the result of a computer simulation.

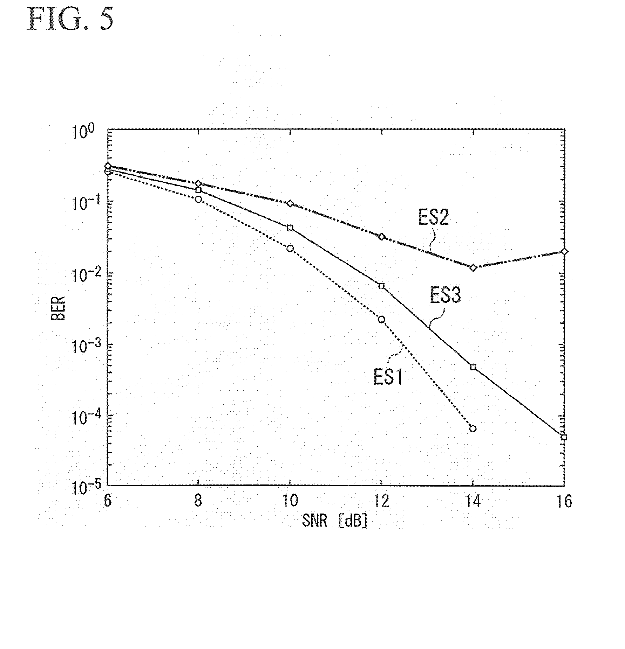

FIG. 5 is a graph that shows both the result of performing a computer simulation using the background art and the result of performing a computer simulation using the radio transmission system 1.

In these computer simulations, the BER performance of the proposed scheme and conventional one are evaluated. Also, a scenario of a time-invariant channel with an impulse response of length L=2 is simulated. As shown in Eq. (79) and Eq. (80), a Gaussian prior for the channel coefficients is assumed.

$$\overline{\mathbf{h}}_{-1} = \begin{bmatrix} 1 \\ 0 \\ 0 \\ 0 \end{bmatrix} \tag{79}$$

$$\mathbf{R}_{-1} = \begin{bmatrix} 0.1 & 0 & 0 & 0 \\ 0 & 0.2 & 0 & 0 \\ 0 & 0 & 0.1 & 0 \\ 0 & 0 & 0 & 0.2 \end{bmatrix} \tag{80}$$

To estimate the BER, 100 signal bursts of duration T = 2000 were randomly generated with a QPSK modulation scheme with differential coding. A new sample channel is drawn from the above prior distribution for each burst. At the receiver 10, three equalization schemes were simulated:

Equalization scheme 1: The conventional blind equalization scheme without any mismatch between I and Q branches.

Equalization scheme 2: The conventional blind equalization scheme with the IQ imbalance of $\varepsilon_1 = 0.05$, $\varepsilon_2 = 0.05$, ($\phi_1 = \pi/20$ [*rad*], and $\phi_2 = \pi/20$ [*rad*].

Equalization scheme 3: The proposed blind equalization with IQ imbalance of the same parameters where these parameters are perfectly known to the receiver 10.

In all three schemes, the number of particles M = 20 and the threshold $\xi = 0.06M$.

FIG. 5 shows the BER performances of the three equalization schemes versus Signal-to-Noise power ratio (SNR). From the figure, it is seen that the proposed scheme efficiently eliminates the effect of the IQ imbalance and achieves a good BER performance while that of the equalization scheme for ideal IQ balance seriously degrades.

The present invention is not limited to the constitution disclosed in the aforementioned embodiments. For example, a program for realizing the functions of the receiver 10 may be recorded on a computer-readable storage medium, and so by causing the program recorded on the storage medium to be read into a computer system and executed, all or a portion of the aforementioned processes may be performed.

"Computer system" here may refer to components including an operating system and hardware such as peripheral devices. Also, in the case of using a World Wide Web system, "computer system" may include an environment providing a home-page (or display environment).

Also, "computer-readable storage medium" refers to a storage device such as a flexible disk, magneto-optical disk, ROM, writable nonvolatile memory such as flash memory, portable media such as CD-ROM, and a hard disk that is housed in a computer system.

Moreover, "computer-readable storage medium" includes one that maintains a program for a specified time, such as volatile memory (for example, Dynamic Random Access Memory (DRAM)) in a computer system that consists of a server and client in the case of a program that is transmitted via a network such as the Internet or a communication line such as telephone lines.

Also, the aforementioned program may be transmitted from a computer system that stores this program in a storage device via a transmission medium or transmission waves in the transmission medium to another computer system. Here, a "transmission medium" that transmits the program refers to a medium that has a function to send information, such as a network like the Internet, or a communication line such as telephone lines.

Moreover, the aforementioned program may be one for realizing a portion of the aforedescribed functions. Moreover, it may be a differential file (differential program) that can realize the aforedescribed functions by combination with a program that is already recorded in a computer system.

**Claims**

1. A receiver comprising:

   a receiving portion (12) that receives signals that have a phase and amplitude showing one of a symbol group consisting of a plurality of symbols;
   an IQ imbalance amount information storage portion (131) that stores IQ imbalance amount information showing the amount of IQ imbalance that occurs in at least one of the phase and amplitude of a signal that is received by the receiving portion;
   a likelihood calculation portion (140) that sets the signal received by the receiving portion as a symbol detection object signal and, based on information showing the phase and amplitude of the symbol detection object signal and the IQ imbalance amount information that is stored in the IQ imbalance amount information storage portion, calculates the likelihood for each symbol that constitutes the symbol group of being the symbol shown by the symbol detection object signal; and
   a symbol detection portion (133) that detects the symbol shown by the symbol detection object signal based on the likelihood of each symbol calculated by the likelihood calculation portion.

2. The receiver according to claim 1, wherein:

   the receiving portion (12) sequentially receives a plurality of signals, and
   the likelihood calculation portion (140) sets each signal sequentially received by the receiving portion as the symbol detection object signal and, based moreover on one or a plurality of symbols detected by the symbol detection portion for the respective one or a plurality of signals received prior to the symbol detection object signal, calculate the likelihood for each symbol that constitutes the symbol group of being the symbol shown by the symbol detection object signal.

3. The receiver according to claim 1 or claim 2, wherein:

   the receiver includes the likelihood calculation portion and the symbol detection portion, and includes a plurality of symbol acquisition portions (132-1, 132-2, ...132-M) that acquire symbols according to the detection result of the symbol detection portion, and
   the receiver additionally includes a symbol determination portion (133) that determines symbols shown by the symbol detection object signal based on the sum for each symbol acquisition portion of the likelihoods calculated for each symbol that constitutes the symbol group by the likelihood calculation portion and each of the symbols acquired by the symbol acquisition portion.

4. A symbol detection method comprising the steps of:

receiving signals that have a phase and amplitude showing one of a symbol group consisting of a plurality of symbols;
storing IQ imbalance amount information showing the amount of IQ imbalance that occurs in at least one of the phase and amplitude of a signal that is received in the receiving step
calculating a likelihood for a symbol shown by a symbol detection object signal for each symbol that constitutes a symbol group based on information showing the phase and amplitude of the symbol detection object signal and IQ imbalance amount information; and
detecting the symbol shown by the symbol detection object signal based on the likelihood of each symbol calculated by the likelihood calculation step.

5. A program comprising data and instructions for a computer to execute:

a likelihood calculation step that sets a signal received in a receiving portion that receives signals having a phase and amplitude showing one of a symbol group consisting of a plurality of symbols as a symbol detection object signal and, based on information showing the phase and amplitude of the symbol detection object signal and IQ imbalance amount information that is stored in an IQ imbalance amount information storage portion that stores IQ imbalance amount information showing the amount of IQ imbalance that occurs in at least one of the phase and amplitude of a signal that is received by the receiving portion, calculates the likelihood for each symbol that constitutes the symbol group of being the symbol shown by the symbol detection object signal; and
a symbol detection step that detects the symbol shown by the symbol detection object signal based on the likelihood of each symbol calculated by the likelihood calculation step.

6. A computer-readable storage medium that stores a program for executing on a computer:

a likelihood calculation step that sets a signal received in a receiving portion that receives signals having a phase and amplitude showing one of a symbol group consisting of a plurality of symbols as a symbol detection object signal and, based on information showing the phase and amplitude of the symbol detection object signal and IQ imbalance amount information that is stored in an IQ imbalance amount information storage portion that stores IQ imbalance amount information showing the amount of IQ imbalance that occurs in at least one of the phase and amplitude of a signal that is received by the receiving portion, calculates the likelihood for each symbol that constitutes the symbol group of being the symbol shown by the symbol detection object signal; and
a symbol detection step that detects the symbol shown by the symbol detection object signal based on the likelihood of each symbol calculated by the likelihood calculation step.

FIG. 1

1 ;RADIO TRANSMISSION SYSTEM

20

| TRANSMITTER |

10

| RECEIVER |

FIG. 2

10 ;RECEIVER

11

12

| RECEIVING PORTION |

13

| DEMODULATION PORTION |

14

| TRANSMISSION PROCESSING PORTION |

FIG. 3

# FIG. 4

S13 — IS RESAMPLING NECESSARY? — NO / YES

S14 — CARRY OUT RESAMPLING.

S15 — $t = t + 1$

S1 — ACQUIRE INITIAL DATA.

S2 — ACQUIRE IQ IMBALANCE INFORMATION.

S3 — RECEIVE SIGNAL $y_t^d$.

S10 — $i = i + 1$

S4 — $i = 1$

S5 — UPDATE CHANNEL BASED ON SYMBOLS $(s_{0:t-1}^{(i)})$ ACQUIRED IN THE PAST AND RECEIVED SIGNAL $\mathbf{y}_t^d$ AND STORE.

S6 — USING AN IQ IMBALANCE-TYPE IMPORTANCE FUNCTION, BASED ON THE RECEIVED SIGNAL $\mathbf{y}_t^d$, SYMBOLS $s_{t-L+1:t-1}^{(i)}$ THAT ARE ACQUIRED WITHIN A PAST L TIME, THE IQ IMBALANCE INFORMATION, AND THE CHANNEL, CALCULATE THE LIKELIHOOD AS A SYMBOL SHOWN BY THE RECEIVED SIGNAL $\mathbf{y}_t^d$ FOR EACH SYMBOL THAT CONSTITUTES THE SYMBOL GROUP.

S7 — BASED ON THE CALCULATED LIKELIHOOD, ACQUIRE THE SYMBOL $s_t^{(i)}$ SHOWN BY THE RECEIVED SIGNAL $\mathbf{y}_t^d$ AND STORE.

S8 — ACQUIRE THE WEIGHT $\tilde{w}_t^{(i)}$ BASED ON THE SUM OF CALCULATED LIKELIHOODS AND THE WEIGHT $w_{t-1}^{(i)}$ THAT IS STORED.

S9 — $i = M$? — NO / YES

S11 — STANDARDIZE THE WEIGHT $\tilde{w}_t^{(i)}$ TO ACQUIRE $w_t^{(i)}$ AND STORE.

S12 — $t = T$? — NO / YES

S16 — BASED ON $s_{1:T}^{(i)}$ AND WEIGHT $w_t^{(i)}$, DETERMINE $s_{1:T}^{(i\max)}$.

FIG. 5

FIG. 6

EP 1 919 153 A1

European Patent
Office

**EUROPEAN SEARCH REPORT**

Application Number

EP 06 30 1106

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | GAUDENZI DE R ET AL: "ANALYSIS AND DESIGN OF AN ALL-DIGITAL DEMODULATOR FOR TRELLIS CODED 16-QAM TRANSMISSION OVER A NONLINEAR SATELLITE CHANNEL" IEEE TRANSACTIONS ON COMMUNICATIONS, IEEE SERVICE CENTER, PISCATAWAY, NJ, US, vol. 43, no. 2/4, PART 1, 1 February 1995 (1995-02-01), pages 659-667, XP000506564 ISSN: 0090-6778 * Abstract * * III. Viterbi Decoding in the Nonlinear Channel * * Appendix II * * Appendix III * ----- | 1-6 | INV. H04L27/38 H04L25/03 |
| A | US 2004/161059 A1 (ANDRIEU CHRISTOPHE [GB]) 19 August 2004 (2004-08-19) * abstract * * paragraph [0010] * * paragraph [0015] - paragraph [0019] * * paragraph [0022] * * paragraph [0042] - paragraph [0048] * ----- | 1-6 | |
| | | | TECHNICAL FIELDS SEARCHED (IPC) |
| A | DE 102 34 166 A1 (ROHDE & SCHWARZ [DE]) 5 February 2004 (2004-02-05) * abstract * * paragraph [0007] * * paragraph [0022] - paragraph [0041] * ----- | 1-6 | H04L |

The present search report has been drawn up for all claims

| Place of search | Date of completion of the search | Examiner |
|---|---|---|
| Munich | 16 April 2007 | Palacián Lisa, Marta |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 919 153 A1**

## ANNEX TO THE EUROPEAN SEARCH REPORT
## ON EUROPEAN PATENT APPLICATION NO.

EP 06 30 1106

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2007

| Patent document cited in search report | | Publication date | Patent family member(s) | | Publication date |
|---|---|---|---|---|---|
| US 2004161059 | A1 | 19-08-2004 | GB | 2395871 A | 02-06-2004 |
| | | | JP | 2004180322 A | 24-06-2004 |
| DE 10234166 | A1 | 05-02-2004 | NONE | | |

EPO FORM P0459

For more details about this annex : see Official Journal of the European Patent Office, No. 12/82